# FASCICULE DE BREVET EUROPEEN

(11) **EP 0 667 075 B1**
(45) Date de publication et mention de la délivrance du brevet: **29.03.2000**
(21) Numéro de dépôt: 94926265.3
(22) Date de dépôt: 01.09.1994
(51) Int. Cl.: H04L 29/06

(54) **PROTOCOLE DE SIGNALISATION SUPPORTANT DES SERVICES MULTIMEDIAS**
SIGNALISIERUNGSPROTOKOLL MIT UNTERSTÜTZUNG FÜR MULTIMEDIADIENSTE
SIGNALLING PROTOCOL SUPPORTING MULTIMEDIA SERVICES

(30) Priorité: 02.09.1993 FR 9310471
(43) Date de publication de la demande: 16.08.1995
(73) Titulaire: ALCATEL, 75008 Paris (FR)
(72) Inventeur: HIN, To, F-75014 Paris (FR)
(74) Mandataire: Sciaux, Edmond
(86) Numéro de dépôt international: FR9401032
(87) Numéro de publication internationale: WO9506991

(56) Documents cités:
- GLOBECOM'91, vol.1, 1991, NEW YORK US pages 223 - 227 WHAY CHIOU LEE ET AL. 'Integrated Packet Networks with Quality of Service Constraints'
- IEEE TRANSACTIONS ON COMMUNICATIONS, vol.39, no.12, Décembre 1991, NEW YORK US pages 1875 - 1885 GUY VONDERWEIDT ET AL. 'A Multipoint Communication Service for Interactive Applications'

## Description

L'invention concerne un protocole de signalisation supportant des services multimédias, pour un réseau de télécommunication comportant une pluralité d'entités qui sont soit des terminaux, soit des noeuds de commutation établissant des connexions entre ces terminaux lorsqu'un appel est établi. Certains de ces terminaux sont dits multimédia parce qu'ils comportent des périphériques et des interfaces assurant parallèlement plusieurs services correspondant & des médias différents, tels que émettre ou recevoir des images vidéo, des sons, ou des données. Pour permettre la transmission de gros débits d'information, le réseau de télécommunication est alors de type à large bande, par exemple un réseau à mode de transfert asynchrone. Pour connecter un même terminal multimédia à un autre terminal multimédia ou à plusieurs autres terminaux dédiés respectivement à différents médias tels que les images vidéo, les sons, et les données, il est nécessaire d'utiliser soit plusieurs connexions, soit une connexion unique sur laquelle sont multiplexés temporellement plusieurs canaux.

L'article de W.C.Lee intitulé "Integrated Packets Networks with Quality of Service Constraints" publié dans GLOBECOM'91, Vol.1,1991, New-York, US, pages 223-227, décrit un tel réseau.

L'union Internationale des Télécommunications prépare une recommandation, référencée Q.93 B, pour un protocole de signalisation supportant une seule connexion entre deux terminaux seulement, dans un réseau de télécommunication à intégration de services et à large bande.

Ultérieurement, il sera souhaitable que des terminaux multimédia puissent être rattachés à plusieurs connexions pour établir les types de communication suivants :
- point - à - multipoint, unidirectionnel, entre un terminal multimédia qui est le seul émetteur et d'autres terminaux multimédia qui sont tous récepteurs ,
- multipoint, bidirectionnel, entre plusieurs terminaux multimédia pouvant émettre à destination de plusieurs terminaux simultanément, et recevoir en provenance de plusieurs terminaux simultanément.

Le but de l'invention est donc de proposer un protocole capable de traiter notamment :
- Un appel multiconnexion, c'est-à-dire comportant l'établissement ou le relâchement de plusieurs connexions dans ce même appel.
- Un appel multipartie, dans lequel plus de deux terminaux multimédia peuvent être mis en communication interactive au cours de ce même appel.
- Un appel qui soit à la fois multiconnexion et multipartie.
- Une modification des caractéristiques d'une connexion pendant la phase active qui suit l'établissement de cette connexion.

Un autre but de l'invention est de proposer un protocole qui soit basé sur le protocole de la recommandation Q.93B, et qui assure une comptabilité ascendante avec ce protocole connu.

L'objet de l'invention est un protocole de signalisation supportant des services multimédia, pour un réseau de télécommunication comportant une pluralité d'entités qui sont : des terminaux, notamment des terminaux multimédia, et des noeuds de commutation établissant des connexions entre ces terminaux lorsqu'un appel est établi ; chaque entité comportant un dispositif de signalisation pour émettre et recevoir des messages de signalisation ; ce protocole consistant à activer, dans le dispositif de signalisation d'une première entité, qui est partie à un appel, un automate pouvant être dans :
- un état de repos stable, où il retourne quand cet appel est relâché ;
- un état actif stable , où il arrive au moment où cet appel est établi ;
   ce protocole étant caractérisé en ce qu'il consiste en outre à :
- faire passer cet automate de l'état actif stable à un premier état instable lorsqu'une première entité émet ou réémet une requête adressée à une seconde entité, cette requête demandant la réalisation d'une opération d'un premier type ;
- puis faire passer cet automate du premier état instable à un deuxième état instable lorsque la première entité reçoit un acquittement dit local indiquant que la requête a bien été reçue par la seconde entité, ou a bien été reçue puis réémise par une entité intermédiaire entre la première et la seconde entité ;
- puis faire passer cet automate du deuxième état instable à l'état actif stable lorsque la première entité reçoit soit un acquittement dit global indiquant que l'opération demandée a été effectivement réalisée par la seconde entité, soit un message indiquant que la requête est rejetée par la seconde entité ou une entité intermédiaire;
- faire passer cet automate de l'état actif stable à un troisième état instable lorsqu'une première entité émet ou réémet une requête adressée à une seconde entité, cette requête demandant la réalisation d'une opération d'un second type ;
- puis faire passer cet automate du troisième état instable à l'état actif stable lorsque la première entité reçoit soit un acquittement dit local indiquant que la requête a bien été reçue par la seconde entité ou a bien été reçue puis réémise par une entité intermédiaire entre la première et la seconde entité;
   et en ce qu'il consiste en outre à :
- subdiviser chaque état dudit automate en une pluralité d'états tins définis respectivement par les valeurs d'une matrice dont les colonnes correspondent respectivement aux connexions établies pour cet appel; dont les lignes correspondent respectivement aux terminaux qui sont parties à cet appel; et contenant des informations binaires représentant l'état de chaque terminal vis à vis de chaque connexion établie pour cet appel ;
- mémoriser au moins partiellement cette matrice dans le dispositif de signalisation de chaque entité qui est concernée par un appel ;
- mettre à jour la matrice de l'automate de chacune des entités concernées par une opération, lorsque cette entité reçoit un message concernant cette opération, et que ce message indique un changement de l'état d'un terminal, qui est partie à l'appel considéré, vis-à-vis de cet appel et/ou vis-à-vis des connexions établies pour cet appel ;
- utiliser cette matrice comme une variable pour ce protocole.

Le protocole ainsi caractérisé est compatible avec la recommandation Q.93B car il met en oeuvre un automate dont l'un des sous-ensemble est identique à l'automate mis en oeuvre dans le protocole selon la recommandation Q.93B. Le protocole selon l'invention a donc pour avantage de permettre de connecter un terminal multimédia monoconnexion à un noeud mettant en oeuvre le protocole selon l'invention. Il a aussi pour avantage de pouvoir être utilisé entre les noeuds d'un réseau.

L'invention sera mieux comprise et d'autres caractéristiques apparaîtront à l'aide de la description ci-dessous et des figures l'accompagnant :
- les figures 1 et 2 illustrent un exemple de mise en oeuvre du protocole selon la recommandation Q.93B, en montrant respectivement les messages qui sont échangés et les changements d'état d'un automate qui est activé dans chaque noeud et chaque terminal concerné par un appel, lorsque l'établissement d'un appel et d'une connexion est demandé ;
- la figure 3 représente un diagramme des changements d'état d'un automate qui est activé dans chaque noeud et chaque terminal, lors de la mise en oeuvre du protocole selon l'invention ;
- la figure 4 représente schématiquement la matrice mise en oeuvre dans le protocole selon l'invention pour définir des états fins subdivisant les états de cet automate ;
- la figure 5 illustre un exemple de mise en oeuvre du protocole selon l'invention, en montrant les messages échangés dans le cas d'une opération consistant à inviter un terminal à faire partie d'un appel déjà établi ;
- la figure 6 montre la modification subie par la matrice dans ce cas ,
- la figure 7 illustre un exemple de mise en oeuvre du protocole selon l'invention, dans le cas de l'opération inverse, consistant à inviter un terminal à ne plus faire partie d'un appel ;
- la figure 8 montre la modification subie par la matrice dans ce cas ;
- la figure 9 illustre un exemple de mise en oeuvre du protocole selon l'invention, dans le cas d'une opération consistant à rattacher un terminal faisant partie d'un appel, à une connexion déjà existante et faisant partie de cet appel ;
- la figure 10 illustre la modification subie par la matrice dans ce cas ;
- la figure 11 illustre un exemple de mise en oeuvre du protocole selon l'invention, dans le cas d'une opération consistant à rattacher un terminal faisant partie d'un appel, à une connexion spécialement créée à cette occasion ;
- la figure 12 montre la modification subie par la matrice dans ce cas ;
- la figure 13 illustre un exemple de mise en oeuvre du protocole selon l'invention, dans le cas d'une opération consistant à détacher un terminal de deux connexions alors qu'il reste partie à l'appel qui possède ces connexions ;
- la figure 14 montre la modification subie par la matrice dans ce cas ;
- la figure 15 illustre un exemple de mise en oeuvre du protocole selon l'invention dans le cas d'une opération consistant à relâcher une connexion qui n'est plus utilisée par un appel ;
- et la figure 16 montre la modification subie par la matrice dans ce cas.

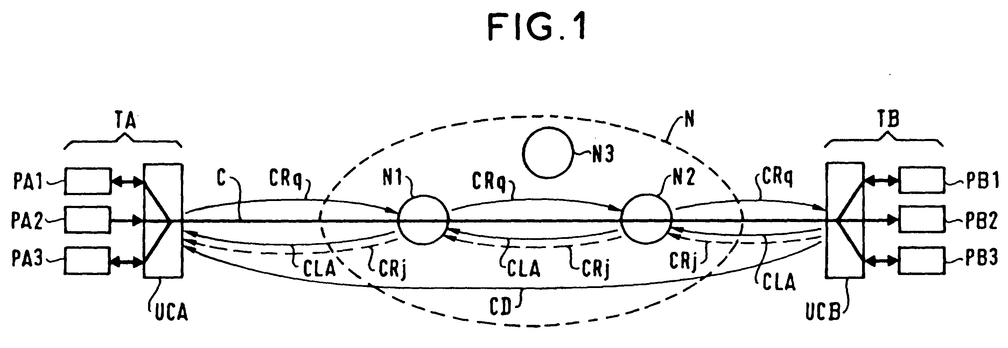

La figure 1 illustre un exemple de mise en oeuvre du protocole selon la recommandation Q.93B, pour réaliser une opération consistant à établir un appel entre un terminal TA et un terminal TB. Cette opération inclut l'établissement d'une connexion unique C. Le terminal TA est constitué d'une unité centrale UCA, et de trois périphériques PA1, PA2, PA3 dédiés respectivement à l'émission-réception de données, à l'émission d'images vidéo, et à l'émission-réception de sons. L'unité centrale UCA assure le multiplexage et le démultiplexage temporel permettant d'acheminer ces trois types de signaux sur la connexion unique C. Le terminal TB est constitué d'une unité centrale UCB et de trois périphériques PB1, PB2, PB3 dédiés respectivement à l'émission-réception de données, la réception d'images vidéo, et l'émission-réception de sons. L'unité centrale UCB assure le démultiplexage et le multiplexage nécessaires pour transmettre les trois types d'informations sur la connexion unique C. Ces deux terminaux communiquent par l'intermédiaire d'un ensemble N de noeuds de commutation N1, N2, N3, et de liaisons de transmission non représentées.

Dans cet exemple, c'est un réseau à large bande, transmettant toutes les informations sous la forme de cellules à mode de transfert à asynchrone. Chaque terminal TA, TB et chaque noeud N1, N2, N3 comporte un dispositif de signalisation capable d'émettre et de recevoir des messages de signalisation sous la forme de cellules analogues aux cellules transportant des informations entre deux terminaux. Ces cellules à mode de transfert asynchrone ont un format normalisé. Chaque dispositif de signalisation peut être constitué d'un processeur et d'une mémoire de programme commandant l'exécution des opérations de signalisation conformément au protocole de signalisation.

La figure 1 représente l'émission et la réception de messages, par les terminaux et par les noeuds d'un réseau N, lors de la réalisation de l'opération consistant à établir un appel et la connexion C, en mettant en oeuvre le protocole selon la recommandation Q.93B.

Lorsque le terminal TA demande l'établissement de cet appel et de cette connexion, son dispositif de signalisation émet un message de signalisation CRq (CALL REQUEST). Ce message est routé par les noeuds N1 et N2 jusqu'au terminal TB, grâce aux informations d'acheminement contenues dans ce message de signalisation, qui sont traduites par chacun des noeuds N1 et N2.

Lorsque le message CRq est reçu par le noeud N1, puis par le noeud N2, puis par le terminal TB, les dispositifs de signalisation de ces entités émettent chacun un message dit d'acquittement local CLA (CALL LOCAL ACK.), adressé à l'entité qui lui a transmis le message CRq, puis réémettent le message CRq en direction du terminal TB qui est le destinataire. Ainsi le terminal TA est informé que le noeud N1 a bien reçu son message et a pu le ré-émettre. Puis le noeud N1 est informé que le noeud N2 a bien reçu son message et a pu le ré-émettre. Puis le noeud N2 est informé que le terminal TB a bien reçu son message, et a pu exécuter l'opération demandée.

En outre, le terminal TB émet un message de signalisation CD (CALL DONE) qui est un acquittement global, diffusé à toutes les entités du réseau. Il est reçu notamment par le terminal TA. Le terminal TA est ainsi informé que le terminal TB a bien reçu le message CRq, demandant l'exécution d'une opération, et que cette opération a été effectivement réalisée par le terminal TB.

Dans le cas où un obstacle quelconque rend impossible la réalisation de l'opération demandée, le terminal TA reçoit généralement un message de signalisation CRj (CALL REJECTED) qui est émis par le noeud N1 si l'obstacle est situé au niveau du noeud N1, ou par le noeud N2 si l'obstacle est situé au niveau du noeud N2, ou par le terminal TB si l'obstacle est situé au niveau du terminal TB. La transmission des messages CRj est représentée sur la figure par des flèches en pointillés, pour la distinguer de la transmission des messages CLA et CA qui concernent le cas où la réalisation de l'opération se déroule bien.

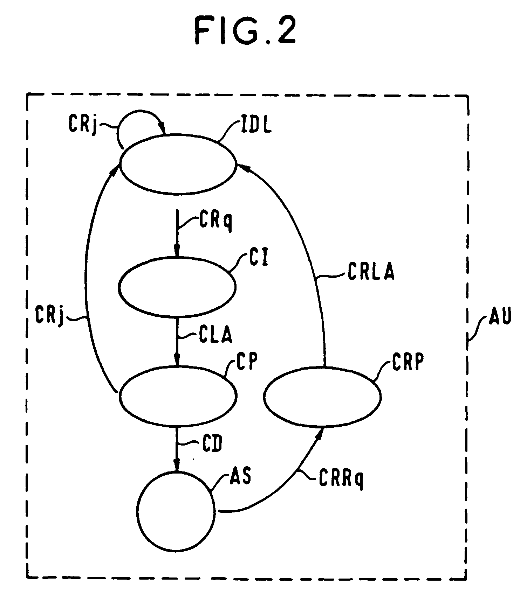

La figure 2 représente un diagramme des changements d'états d'un automate AU qui est activé dans tout le dispositif de signalisation de chaque entité qui émet ou réémet un message demandant l'établissement ou le relâchement d'un appel et d'une connexion. Cet automate AU est propre à un appel. Ce diagramme comporte : une première partie qui représente les changements d'états lorsque le dispositif de signalisation émet un message CRq demandant l'établissement d'un appel et d'une connexion ; et une seconde partie qui représente les changements d'états lorsque le dispositif de signalisation émet un message CRRq (CALL RELEASE REQUEST) demandant le relâchement d'un appel et de la connexion unique correspondante.

Dans la première partie du diagramme, l'automate AU est dans un état de repos IDL (IDLE) avant l'émission du message de signalisation CRq. Il passe dans un état instable CI (CALL INITIATED) lorsque le dispositif de signalisation émet le message CRq. Puis, lorsque le dispositif de signalisation reçoit le message CLA d'acquittement local, indiquant que la demande a bien été reçue par le noeud N1 et qu'il va la réémettre en direction du terminal destinataire, l'automate AU passe dans un état instable, CP (CALL PENDING). Enfin, il passe dans un état stable AS (ACTIVE STABLE) lorsque le dispositif de signalisation reçoit le message d'acquittement global CD lui indiquant que l'appel et la connexion correspondante ont été effectivement établis. Si le noeud N1 ne peut pas acheminer le message CRq, il répond par le message CRj. L'automate AU du terminal TA reste dans l'état de repose IDL. Si le dispositif de signalisation reçoit un message CRj indiquant que l'établissement de l'appel n'a pas pu être réalisé au niveau de N2 ou TB, l'automate AU passe de l'état CP à l'état de repos IDL.

Les états CI et CP sont instables pour les raisons suivantes : le dispositif de signalisation du terminal TA déclenche deux temporisateurs lorsqu'il émet un message de signalisation CRq. Le message CLA d'acquittement local doit être reçu avant l'expiration d'un premier délai, alors que le message CD d'acquittement global doit être reçu avant l'expiration d'un second délai. L'absence d'un de ces deux messages d'acquittement dans ces délais déclenche une procédure de défense.

La seconde partie du diagramme des états est parcourue lorsque le dispositif de signalisation demande la réalisation de l'opération inverse de cette décrite ci-dessus, c'est-à-dire le relâchement d'un appel, avec le relâchement de la connexion unique correspondante. Cette opération est plus simple que l'établissement. Elle ne met en jeu que deux messages au lieu de quatre : Lorsqu'un dispositif de signalisation émet ou réémet un message CRRq (CALL RELEASE REQUEST), à partir de l'état stable AS, pour demander à une entité destinataire le relâchement de l'appel correspondant, l'automate de ce dispositif de signalisation passe dans un état instable CRP (CALL RELEASE PENDING). Lorsque ce dispositif de signalisation reçoit ensuite un message d'acquittement local CRLA (CALL RELEASE LOCAL ACK.), son automate retourne à l'état de repos IDL, sans attendre un message d'acquittement global. Durant le relâchement d'un appel et de sa connexion, le risque de non transmission de la demande jusqu'à l'entité destinataire est considéré comme faible et sans gravité.

L'opération d'établissement d'un appel et d'une connexion, décrite précédemment est dite de type à quatre messages car elle met en jeu quatre messages : CRq, CLA, CD, CRj. l'opération de relâchement d'un appel et d'une connexion, décrite précédemment, est dite de type à deux messages car elle ne met en jeu que deux messages : CRRq et CRLA. Il n'est pas prévu de cas où l'appel et la connexion ne pourraient être relâchées, il n'y a donc pas de message analogue à ORj.

Le protocole selon l'invention consiste lui aussi à activer un automate dans le dispositif de signalisation de chaque entité qui émet ou réémet un message demandant la réalisation d'une opération. Mais cet automate est plus complexe car l'opération d'établissement d'un appel est dissociée de l'opération invitant un terminal à faire partie de cet appel, et de l'opération établissant une connexion. De même, les opérations inverses sont dissociées, afin de permettre de modifier à tout moment le nombre de terminaux parties à un appel et le nombre de connexions entre ces terminaux.

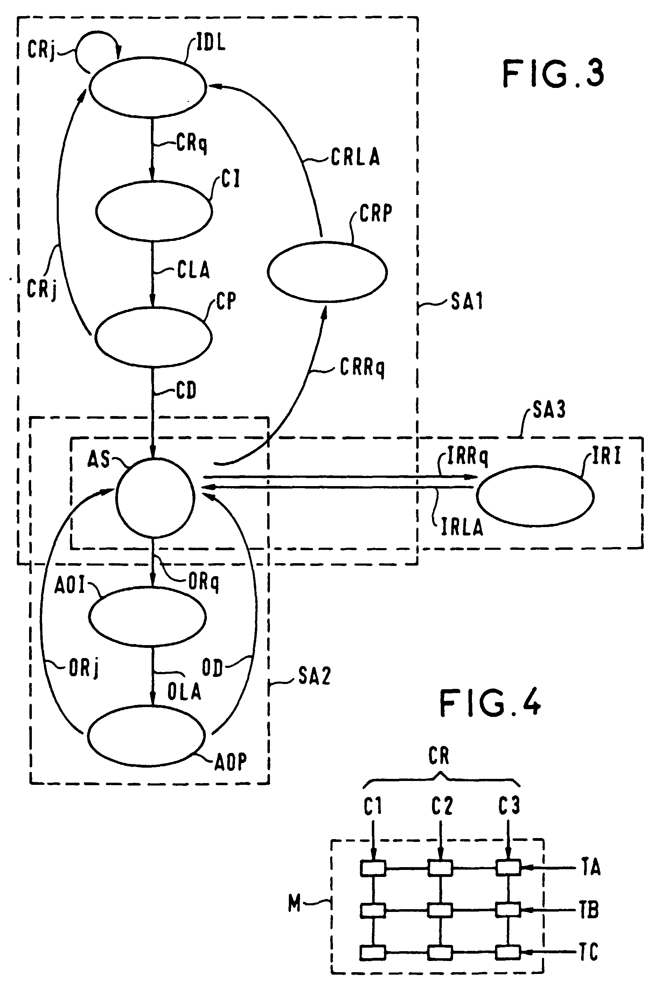

La figure 3 représente un diagramme des changements d'état de l'automate qui est activé lors de la mise en oeuvre du protocole selon l'invention. Il comporte certaines caractéristiques communes avec l'automate AU mettant en oeuvre le protocole selon la recommandation Q.93B. En effet, il comporte :
- Un sous-ensemble SA1 qui est identique à la première partie du diagramme de la figure 2 car il est constitué des états IDL, CI, CP, AS. Il est parcouru seulement lors de la réalisation des opérations d'établissement et de relâchement d'un appel, et n'intervient pas pour les connexions. D'autres sous-ensemble permettent de prendre en compte les nombreuses autres opérations découlant du caractère multipartie et multiconnexion d'un appel.
- Un sous-ensemble SA2 qui est analogue à la première partie du diagramme de la figure 2, car ce sous-ensemble SA2 est parcouru lorsqu'une opération du type à quatre messages est demandée par le dispositif de signalisation, à partir de l'état stable AS correspondant à un appel établi. Il comprend trois états : AS, AOI, et AOP.
- Un sous-ensemble SA3 qui est analogue à la seconde partie du diagramme de la figure 2, car ce sous-ensemble SA3 est parcouru lorsqu'une opération du type à deux messages est demandée par le dispositif de signalisation à partir de l'état stable AS correspondant à un appel établi. Il comprend deux états : AS et IRI.

Sur la figure 3, les messages intervenant dans les sous-ensembles SA2 et SA3 sont référencés de manière générique. Des exemples de message seront décrits plus loin.

Le sous-ensemble SA2 représente le comportement suivant : lorsque le dispositif de signalisation d'une entité du réseau émet ou réémet un message ORq (OPERATION REQUEST) demandant la réalisation d'une opération du type à quatre messages, l'automate de ce dispositif de signalisation, propre à cet appel et propre à l'opération demandée, quitte l'état stable As, correspondant au fait que l'appel a déjà été établi précédemment. Il passe dans un état instable AOI (ACTIVE OPERATION INITIATED), dans lequel il attend que l'entité à laquelle il a fourni le message ORq lui indique qu'elle a bien reçu ce message, et peut l'acheminer en direction de l'entité destinataire, si ce n'est pas elle-même.

Si le dispositif de signalisation reçoit un message d'acquittement local OLA (OPERATION LOCAL ACK.), l'automate passe alors dans l'état instable AOP (ACTIVE OPERATION PENDING). Si le dispositif de signalisation reçoit ensuite un message d'acquittement global OD ( OPERATION DONE) lui indiquant que l'opération a été effectivement réalisée par l'entité destinataire de la demande, l'automate repasse dans l'état stable AS (ACTIVE STABLE) où il peut attendre d'autres demandes pour d'autres opérations.

Si le dispositif de signalisation reçoit une message ORj (OPERATION REJECTED) au lieu du message OD, cela signifie que la demande n'a pas pu être acheminée jusqu'à l'entité destinataire, ou bien que celle-ci n'est pas en mesure de réaliser l'opération demandée. L'automate reste ou repasse dans l'état stable AS, car l'appel reste établi néanmoins.

Le sous-ensemble SA3 représente le comportement suivant : lorsque le dispositif de signalisation d'une entité du réseau émet ou réémet un message IRRq (INTERMEDIATE RELEASE REQUEST) demandant la réalisation d'une opération du type à deux messages, l'automate de ce dispositif de signalisation, propre à cet appel et à cette opération, quitte l'état stable AS, correspondant au fait que l'appel a déjà été établi précédemment, et passe dans un état instable IRI (INTERMEDIATE REQUEST INITIATED). Il attend alors que l'entité à laquelle il a fourni le message IRRq lui indique qu'elle peut acheminer ce message IRRq en direction de l'entité destinataire, si ce n'est pas elle-même.

Lorsque le dispositif de signalisation reçoit le message d'acquittement local IRLA (INTERMEDIATE RELEASE LOCAL ACK.), l'automate retourne à l'état stable AS. Il n'est pas prévu de message d'acquittement global qui indiquerait que l'opération a été effectivement réalisée, dans le cas des opérations du type à deux messages seulement. Il n'est pas prévu, non plus, de message pour rejeter la demande.

D'autre automates analogues subissent des changements d'état analogues dans tout terminal quelconque ou noeud quelconque du réseau, lorsqu'il émet ou réémet un message de signalisation demandant à une autre entité la réalisation d'une opération.

Il est à noter qu'il existe aussi des opérations simples dites à un seul message, consistant à partir d'un état et à revenir au même état après avoir réalisé, dans l'entité considérée, une opération demandée dans un message reçu par cette entité. Ces transitions d'un état à un même état ne sont pas représentées sur la figure 3.

Les états de ces automates sont subdivisés en états plus fins au moyen d'une matrice définissant des états fins, pour prendre en compte l'état de chaque terminal vis à vis de chaque connexion. Une telle matrice est mémorisée dans le dispositif de signalisation de chaque entité du réseau concernée par cet appel. Dans le cas d'un appel de type multipoint, la matrice est stockée identiquement dans toutes les entités, noeuds ou terminaux, faisant parties d'un appel car toutes ces entités ont besoin de connaître l'état de chacun des terminaux vis-à-vis de cet appel et vis-à-vis de toutes les connexions établies pour cet appel. La matrice est mise à jour constamment.

Dans le cas d'un appel point à multipoint, un seul terminal, celui qui émet des informations, a besoin de mémoriser une matrice complète. Les autres terminaux, seulement récepteurs, ne mémorisent et ne mettent à jour qu'une matrice simplifiée qui indique seulement l'état de ce terminal vis-à-vis de l'appel et vis-à-vis des connexions établies pour cet appel. Chaque noeud mémorise une matrice plus ou moins simplifiée selon le noeud, car elle ne mémorise que l'état des terminaux accessibles via ce noeud, vis-à-vis de l'appel et vis-à-vis des connexions établies pour cet appel.

La figure 4 représente schématiquement la matrice M définissant des états fins pour un appel donné, dans un exemple où l'appel est du type multipoint et est référencé CR. Cet appel CR comporte trois connexions C1, C2, C3; et trois terminaux TA, TB, TC sont parties à cet appel. Dans cet exemple, la présence de trois lignes de la matrice correspondant aux terminaux TA, TB, TC indique que ces trois terminaux sont parties à l'appel CR qui correspond à cette matrice ; et la présence de trois colonnes correspondant aux connexions C1, C2, C3 indique que l'appel comporte trois connexions, à l'instant considéré.

La valeur d'informations binaires situées aux intersections des colonnes correspondant aux connexions C1, C2, C3, avec les lignes correspondants aux terminaux TA, TB, TC, représente le rattachement ou l'absence de rattachement d'un terminal à une connexion.

Une telle matrice est utilisable pour distinguer des états fins dans les états des automates propres à tous les types d'opérations. Il n'est donc pas nécessaire de mémoriser une matrice par opération. Cette matrice constitue une variable pour le protocole. Le dispositif de signalisation de chaque entité agit en fonction de cette variable, par exemple pour rattacher tel ou tel terminal à telle ou telle connexion.

La matrice est mémorisée dans le dispositif de signalisation de chaque entité concernée par l'appel, dans une mémoire vive à accès aléatoire, adressée par : une référence désignant l'appel ; une référence désignant une connexion ; et une référence désignant un terminal.

Cette matrice est mise à jour dans chaque entité concernée par l'appel CR, lorsque son dispositif de signalisation reçoit un message concernant l'appel CR et que ce message indique un changement de l'état de l'appel CR ou d'un terminal qui est partie à l'appel CR, vis-à-vis d'une connexion établie pour l'appel CR, ou d'un changement de l'état d'une connexion établie pour l'appel CR. L'utilisation de cette matrice sera mieux comprise à l'aide de la description d'exemples d'opération, réalisées dans le cadre d'un appel concernant plusieurs terminaux multimédias.

Dans le cadre du protocole selon l'invention, les terminaux qui sont parties à un appel n'ont pas tous les mêmes droits. Certains de ces droits dépendent du type de communication établie entre ces terminaux. On distinguera : des communications unidirectionnelles ou bidirectionnelles de point - à - point, entre deux terminaux seulement ; des communications unidirectionnelles de point - à - multipoint ; et des communications bidirectionnelles multipoint.

Le terminal qui demande l'établissement d'un appel est appelé propriétaire de cet appel et il a des droits exclusifs :
- le droit d'inviter au moins un autre terminal à être partie à cet appel ;
- le droit d'inviter au moins un autre terminal à ne plus être partie à cet appel ;
- le droit de relâcher cet appel.

Il a, en outre, le droit de transférer l'ensemble des droits précédents à un autre terminal qui est partie à cet appel, dans le cas où cet appel établit une communication du type bidirectionnel multipoint.

Les autres terminaux qui sont parties à cet appel, mais qui n'ont pas demandé son établissement, sont appelés terminaux non propriétaires de l'appel. Dans le cas d'une communication du type point - à - point entre deux terminaux, un terminal appelant et un terminal appelé, le terminal appelant est le terminal propriétaire de l'appel alors que le terminal appelé est non propriétaire de l'appel. Dans le cas d'une communication du type unidirectionnel point - à - multipoint, entre un terminal émetteur d'informations et une pluralité de terminaux récepteurs des informations, le terminal émetteur est le terminal propriétaire de l'appel alors que les terminaux récepteurs sont des terminaux non propriétaires de l'appel. Dans le cas d'une communication du type bidirectionnel multipoint, entre une pluralité de terminaux qui sont tous émetteurs et récepteurs d'information, le propriétaire de l'appel est celui ayant demandé l'établissement de l'appel, tous les autres étant non propriétaires de l'appel. Mais le propriétaire peut transférer l'intégralité de ses droits à l'un des autres terminaux qui sont parties à l'appel, parce qu'ils ont tous la possibilité d'émettre et de recevoir des informations.

Un terminal non propriétaire de l'appel a le droit de demander son détachement d'un appel, quel que soit le type de communication.

On distingue plusieurs types de connexion :
- point - à - point unidirectionnel,
- point - à - point bidirectionnel, en distinguant une connexion symétrique qui a les mêmes caractéristiques dans les deux sens et une connexion asymétriques qui a au moins une caractéristique différente dans les deux sens, par exemple la bande passante ou la qualité de service ;
- point - à - multipoint unidirectionnel.

Un terminal partie à un appel, qui demande l'établissement d'une connexion avec au moins un autre terminal partie à ce même appel est appelé propriétaire de cette connexion, et il a le droit exclusif d'attribuer une référence à cette connexion. Il a en outre les droits suivants :
- Inviter un ou plusieurs autres terminaux qui sont parties à cet appel, à être rattachés à cette connexion ;
- Inviter un ou plusieurs terminaux qui sont parties à cet appel, à être détachés de cette connexion ;
- Demander une modification des caractéristiques de cette connexion, au réseau et aux terminaux rattachés à cette connexion ;
- Demander le relâchement de cette connexion.

Un terminal rattaché à une connexion mais qui n'est pas propriétaire de cette connexion a seulement le droit de se détacher de cette connexion, à un instant quelconque. Dans le cas où le terminal propriétaire d'une connexion se détache de cette connexion, il n'a pas le droit de transférer l'ensemble des droits précédents à un autre terminal qui est attaché à cette connexion, notamment pour éviter tout problème avec la taxation.

L'attribution de certains droits exclusifs au terminal propriétaire d'un appel et de certains droits exclusifs au terminal propriétaire d'une connexion a pour avantage de simplifier beaucoup la sémantique des messages de signalisation. La qualité de propriétaire ou de non propriétaire d'un appel, ou d'une connexion, peut être déduite de la nature du message, au lieu d'être mentionnée explicitement dans ce message.

Tous les messages de signalisation émis par le dispositif de signalisation d'une entité du réseau contiennent : une référence désignant cette entité, une référence désignant l'appel qui est concerné par ce message, et éventuellement une référence désignant une autre entité, destinataire, ou une référence de connexion. La référence désignant un appel est choisie au moment de l'établissement de cet appel, par le terminal demandant l'établissement de cet appel. Cette référence a une signification locale seulement. Cette référence est traduite dans chaque noeud retransmettant ce message. La référence désignant une entité du réseau, pour un appel donné, est allouée par le terminal propriétaire de l'appel, et elle a une signification globale dans tout le réseau. la référence désignant une connexion est attribuée par le terminal propriétaire de cette connexion lorsqu'il demande l'établissement de cette connexion. Sa signification est globale, c'est-à-dire est reconnue dans tout le réseau de télécommunication pour cet appel.

Le protocole selon l'invention supporte les opérations suivantes :
- Groupement de connexions qui suivent une même route.
- Etablissement d'un appel entre deux terminaux, pour une ou plusieurs connexions point - à - point, unidirectionnelles ou bidirectionnelles, symétriques ou asymétriques ; avec ou sans une procédure vérifiant que le terminal appelé est conforme aux besoins en ressources, exprimés par le terminal demandeur.
- Etablissement d'un appel entre plus de deux terminaux, pour une ou plusieurs connexions unidirectionnelles point - à - multipoint ; avec ou sans une procédure vérifiant qu'un terminal demandé est conforme aux besoins en ressources, exprimés par un terminal demandeur.
- Invitation d'un ou plusieurs autres terminaux à être parties à un appel existant, avec ou sans rattachement aux connexions existantes, sous la commande du terminal propriétaire de l'appel.
- Invitation d'un ou plusieurs terminaux rattachés à ne plus être parties à un appel, sous la commande du terminal propriétaire de l'appel.
- Détachement d'un terminal vis-à-vis d'un appel, à son initiative, et notification au propriétaire de cet appel.
- Création d'une ou plusieurs connexions dans un appel.
- Rattachement à une connexion d'un ou plusieurs terminaux, qui sont parties à un appel, sous la commande du terminal propriétaire de cette connexion.
- Détachement d'un ou plusieurs terminaux, vis-à-vis d'une connexion, sous la commande du terminal propriétaire de cette connexion.
- Modification des caractéristiques d'une connexion par le terminal propriétaire de cette connexion.
- Détachement, vis-à-vis d'une connexion, d'un terminal non propriétaire de cette connexion, à l'initiative de ce terminal, et notification au terminal propriétaire de la connexion.
- Relâchement d'une ou plusieurs connexions par le terminal propriétaire de cette connexion ou de ces connexions.
- Relâchement d'un appel par le propriétaire de cet appel.
- Rapport sur l'état d'un appel.
- Rapport sur l'état d'un terminal partie à un appel, au terminal propriétaire de cet appel.
- Rapport sur l'état d'une connexion, au terminal propriétaire de cette connexion.
- Transfert de la propriété d'un appel, du terminal propriétaire à un autre terminal non propriétaire de cet appel.

La description ci-dessous considère à titre d'exemple les opérations suivantes : le rattachement et le détachement d'un terminal à un appel ; le rattachement et le détachement d'un terminal à des connexions. Elle mentionne les modifications qui correspondent dans la matrice définissant les états fins dans toutes les entités concernées. Les appels considérés sont du type multipoint, car c'est le cas plus complexe.

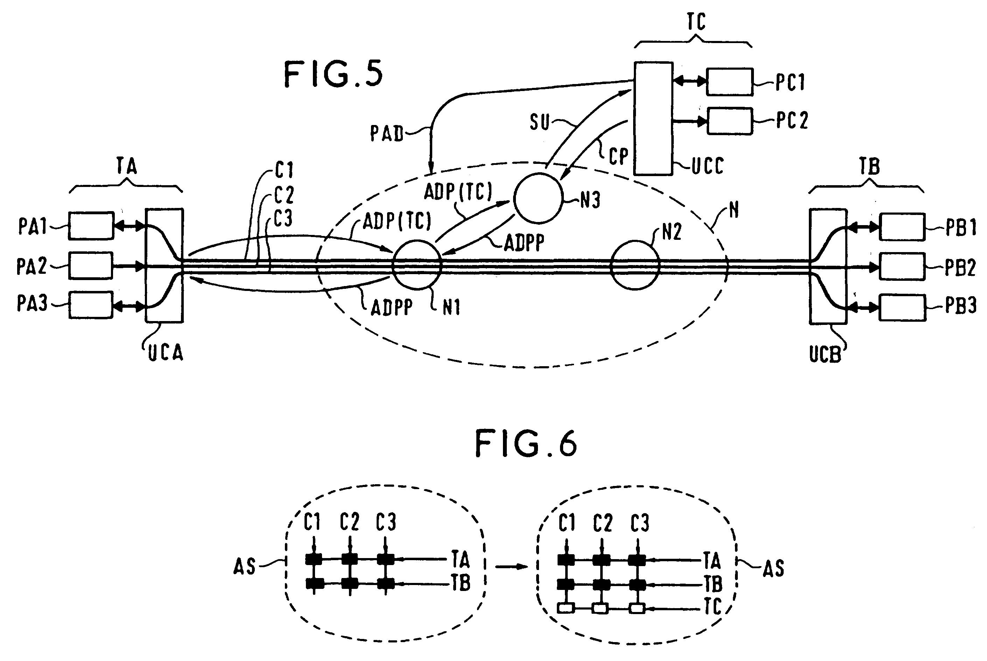

La figure 5 illustre les échanges de messages dans le cas d'une opération où un terminal TA propriétaire d'un appel invite un terminal TC à devenir partie à cet appel. Un terminal TB est déjà partie à cet appel et est relié au terminal TA par trois connexions C1, C2, C3, par l'intermédiaire de deux noeuds N1 et N2 d'un réseau N. Dans cet exemple, le terminal TA comporte une unité centrale UCA et trois périphériques PA1, PA2, PA3 dédiés respectivement à l'émission-réception de données, à l'émission d'images vidéo, et à l'émission-réception de sons. Le terminal TB comporte une unité centrale UCB et trois périphériques PB1, PB2, PB3, dédiés respectivement à l'émission-réception de données, la réception d'images vidéo, et l'émission-réception de sons. Le terminal TC comporte une unité centrale UCC et deux périphérique PC1 et PC2, le premier étant dédié à l'émission-réception de données, le second étant dédié à l'émission-réception d'images vidéo, par exemple. La connexion C1 est une connexion bidirectionnelle transmettant les données. La connexion C2 est une connexion unidirectionnelle transmettant des images vidéo. La connexion C3 est une connexion bidirectionnelle transmettant des sons.

Lorsque le dispositif de signalisation du terminal TA émet un message ADP(TC) (ADD PARTY TC) demandant la réalisation de l'opération de rattachement du terminal TC à cet appel, ce dispositif de signalisation active un automate propre à cet appel et propre à cette opération. Il est analogue à l'automate dont les états sont représentés sur la figure 3 et qui ont été décrits précédemment. Il parcourt le sous-ensemble SA2 car il s'agit d'une opération du type à quatre messages.

Avant l'émission du message ADP (TC), il est dans l'état stable AS, correspondant au fait que l'appel a été établi précédemment. Après que le terminal TA ait émis le message ADP (TC) (ADD PARTY TC) invitant le terminal TC à se rattacher à l'appel considéré, l'automate passe dans l'état AOI instable. Cet automate passe ensuite dans l'état AOP instable, lorsqu'il reçoit un message ADPP (ADD PARTY PROCEEDING) signifiant que le noeud N1 a bien reçu le message ADP (TC), et qu'il peut le ré-émettre en direction de TC. Enfin l'automate retourne à l'état stable AS, lorsqu'il reçoit un message PAD (PARTY ADDED) signifiant que le terminal TC destinataire du message ADP (TC) a bien reçu ce message et qu'il a pu exécuter l'opération demandée. Le message PAD est un acquittement global qui est diffusé à toutes les entités du réseau.

Une matrice est mémorisée dans TA,TB, TC, N1, N2, N3 pour définir des états fins à l'intérieur des états des automates mis en oeuvre dans les dispositifs de signalisation de ces entités. Considérons à titre d'exemple la matrice mémorisée dans le dispositif de signalisation du terminal TA.

La figure 6 représente respectivement à gauche et à droite le contenu de la matrice lorsque l'automate est dans l'état stable AS avant le rattachement du terminal TC, puis lorsqu'il est revenu à l'état actif AS, après le rattachement du terminal TC. Avant le rattachement du terminal TC, la matrice ne comporte que deux lignes correspondant respectivement au terminal TA et au terminal TB ; et trois colonnes correspondant respectivement aux trois connexions C1, C2, C3. Les six cases de la matrice contiennent respectivement six informations binaires représentées par des carrés noirs, indiquant que les terminaux TA et TB sont chacun parties à l'appel et sont connectés aux trois connexions C1, C2, C3. Lorsque le terminal TC a été rattaché à cet appel, les six cases de la matrice correspondant aux terminaux TA et TB ont encore le même contenu, mais la matrice comporte une ligne de plus correspondant au terminal TC. Cette ligne comporte trois cases dont les contenus, représentés en blanc, sont trois informations binaires indiquant que le terminal TC est partie à l'appel mais n'est pas connecté aux connexions C1, C2, C3.

Le noeud N1 comporte un dispositif de signalisation non représenté, qui peut être constitué d'un processeur et d'une mémoire de programme, dont le fonctionnement est le suivant. Lorsqu'il reçoit le message ADP (TC), il active un automate propre à cet appel et propre à l'opération de rattachement, afin de réémettre ce message. C'est un automate analogue à celui dont les états sont représentés sur la figure 3 et décrits précédemment. Il parcourt le sous-ensemble SA2 car il s'agit d'une opération du type à quatre messages.

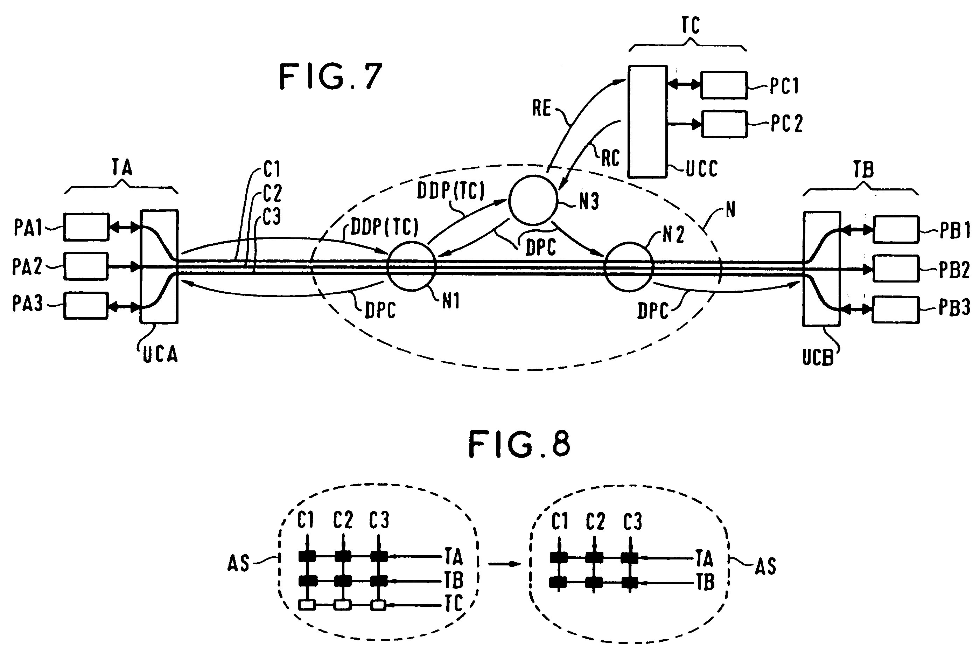

Le noeud N1 retransmet le message ADP (TC) à un noeud N3 qui permet l'acheminement du message en direction du terminal destinataire TC. Puis le noeud N1 reçoit le message d'acquittement local ADPP fourni par le noeud N3. Enfin, il reçoit le message d'acquittement global PAD qui est transmis à travers tout le réseau. Le dispositif de signalisation du noeud N1 mémorise aussi la matrice définissant les états fins. Son contenu subit la modification représentée sur la figure 7 et décrite précédemment pour la matrice mémorisée dans le terminal TA : Ce contenu est mis à jour en rajoutant la ligne correspondant au terminal TC, lorsque le noeud N1 reçoit le message d'acquittement global PAD.

Le noeud N3 est analogue au noeud N1 et comporte un dispositif de signalisation ayant un fonctionnement analogue à celui du noeud N1 et à celui du terminal TA. Lorsqu'il reçoit le message ADP (TC) il active un automate propre à cet appel et propre à l'opération de rattachement. C'est un automate analogue à celui dont les états sont représentés sur la figure 3 et décrits précédemment. La seule différence par rapport aux dispositifs de signalisation du terminal TA et du noeud N1 consiste dans le fait que le noeud N3 ne retransmet pas le message ADP (TC), mais le remplace par un message SU (SET UP) commandant le terminal TC pour exécuter le rattachement ; et dans le fait que le terminal TC émet un message d'acquittement local appelé CP (CALL PROC), au lieu de ADPP. D'autre part, au moment où il reçoit le message ADP (TC), le dispositif de signalisation du noeud N3 ne mémorise pas encore la matrice définissant les états fins. Il constitue une matrice, identique à celle mémorisée par le terminal TA et par le noeud N1, à partir d'informations contenues dans le message ADP (TC) que lui fournit le noeud N1.

Le terminal TC comporte un dispositif de signalisation constitué par son unité centrale UCC et une mémoire de programme. Ce dispositif de signalisation active un automate simple, non représenté sur les figures, qui décide s'il peut exécuter l'opération demandée, ou s'il doit rejeter la demande. Selon le cas, il émet un message d'acquittement local CP et un message d'acquittement global PAD ; ou bien il émet un message de rejet, non représente sur la figure 5.

Par ailleurs, le dispositif de signalisation du terminal TC comporte un automate analogue à celui dont les états sont représentés sur la figure 3 et qui ont été décrits précédemment. Mais cet automate n'est activé que lorsque le terminal émet un message demandant la réalisation d'une opération.

Lorsqu'il reçoit le message SU, le terminal TC ne mémorise pas encore de matrice définissant des états fins. S'il accepte d'être partie à cet appel, il constitue une matrice identique à celle mémorisée par le terminal TA et par les noeuds N1 et N3, à partir d'informations contenues dans le message SU que lui fournit le noeud N3 auquel il est rattaché.

Pendant cette opération de rattachement du terminal TC, les dispositifs de signalisation du noeud N2 et du terminal TB mettent à jour, eux aussi, leur matrice définissant des états fins pour cet appel, en rajoutant la ligne correspondant à TC lorsqu'ils reçoivent le message d'acquittement global PAD, car ils sont concernés par les opérations portant sur le terminal TC, cet appel étant du type multipoint.

Par contre, les entités qui ne sont pas concernées par ce rattachement, c'est-à-dire les terminaux qui ne sont pas parties à cet appel et les noeuds qui ne sont pas utilisés comme intermédiaires pour acheminer des messages entre les terminaux parties à cet appel, ne mémorisent pas de matrice définissant des états fins, pour cet appel. Par conséquent ils ne tiennent pas compte des accusés de réception globaux concernant cet appel. Pour simplifier la figure 5, le réseau N représenté ne comporte que des entités concernées par l'appel considéré.

Le cas d'une communication point à multipoint serait plus simple, Il n'y a alors qu'un seul terminal qui émet des informations vers les autres. Ce terminal est propriétaire de l'appel. Il est concerné par l'état de tous les autres terminaux, vis-à-vis de toutes les connexions établies par cet appel. Par contre, tous les autres terminaux ne sont concernés que par leur état vis-à-vis des connexions susceptibles de les relier au terminal propriétaire de l'appel. Chaque terminal non propriétaire de l'appel mémorise une matrice simplifiée qui indique seulement les connexions auxquelles il est rattaché, pour l'appel considéré. Chaque noeud mémorise une matrice simplifiée qui indique seulement les connexions auxquelles il est rattaché et les terminaux utilisant des connexions passant par ce noeud, pour l'appel considéré.

Les figures 7 et 8 illustrent l'opération inverse de la précédente, c'est-à-dire l'opération de détachement du terminal TC d'un appel auquel les terminaux TA, TB, TC sont parties. Comme pour l'opération de rattachement, le terminal TA et les noeuds N1, N3 activent chacun un automate propre à cet appel et propre à cette opération. C'est un automate analogue à celui dont les états sont représentés sur la figure 3 et qui ont été décrits précédemment. Plus précisément, cet automate parcourt les états du sous-ensemble SA3, car l'opération de détachement d'un terminal est une opération du type à deux messages, le message d'accusé de réception global et le message de rejet n'existant pas pour cette opération.

Le terminal TA émet un message DDP ( TC) (DROP PARTY TC) invitant le terminal TC à ne plus être partie à l'appel considéré. L'automate du terminal TA passe alors de l'état stable AS, correspondant au fait que l'appel a été établi précédemment, à l'état instable IRI où il attend un acquittement local. Le noeud N1 émet un message d'acquittement local DPC (DROP PARTY COMPLETE) à destination du terminal TA, lui indiquant que le noeud N1 va acheminer le message. L'automate du terminal TA, retourne alors à l'état stable AS.

Le noeud N1 réémet ensuite le message DPC (TC) vers le noeud N3, à destination de TC. Le dispositif de signalisation du noeud N3 réémet le message DPC (TC) à destination de TC. Le dispositif de signalisation du noeud N1 active alors un automate propre à cet appel et à cette opération. C'est un automate analogue à celui dont les états sont représentés sur la figure 3 et qui ont été décrits précédemment. Plus précisément, cet automate ne parcourt que les états du sous-ensemble SA3, car l'opération de détachement d'un terminal est une opération du type à deux messages. Le noeud N3 émet un message d'acquittement local DPC à destination du noeud N1. L'automate de ce dernier revient alors à l'état stable AS.

Puis le noeud N3 réémet le message DDP (TC) sous une forme différente : un message RE (RELEASE) commandant au terminal TC de se détacher de l'appel. Ce dernier répond par un message d'acquittement local RC (RELEASE COMPLETE). Le dispositif de signalisation du noeud N3 active un automate propre à cet appel et à cette opération. C'est un automate analogue à celui dont les états sont représentés sur la figure 3 et qui ont été décrits précédemment. Plus précisément, cet automate ne parcourt que les états du sous-ensemble SA3. Il passe de l'état AS à l'état instable IRI lorsqu'il émet le message RE, puis revient à l'état stable AS quand il reçoit le message d'acquittement local RC.

Le terminal TC n'émet pas d'acquittement global. Par contre, le message d'acquittement local RC est diffusé à trouver tout le réseau N afin que les autres entités concernées par le détachement du terminal TC puissent mettre à jour leur matrice. Dans cet exemple, l'appel étant du type multipoint, le noeud N2 et le terminal TB sont concernés par le détachement du terminal TC puisque ce détachement les empêchera d'émettre des informations à destination du terminal TC.

La figure 8 représente la modification subie par la matrice définissant les états fins, au cours de cette opération de détachement, dans les dispositifs de signalisation de toutes les entités concernées par ce détachement, c'est-à-dire TA, TB, TC, N1, N2, N3 dans cet appel multipoint. Considérons par exemple la matrice mémorisée dans le dispositif de signalisation du terminal TA. Avant la réalisation de cette opération, l'automate du terminal TA est dans son état stable AS et la matrice comporte trois colonnes correspondant aux terminaux C1, C2, C3, et trois lignes correspondants aux terminaux TA, TB, et TC. Après la réalisation effective de l'opération de détachement de TC, l'automate du terminal TA est revenu dans son état stable AS, mais la matrice ne comporte plus que deux lignes correspondant aux terminaux TA et TB.

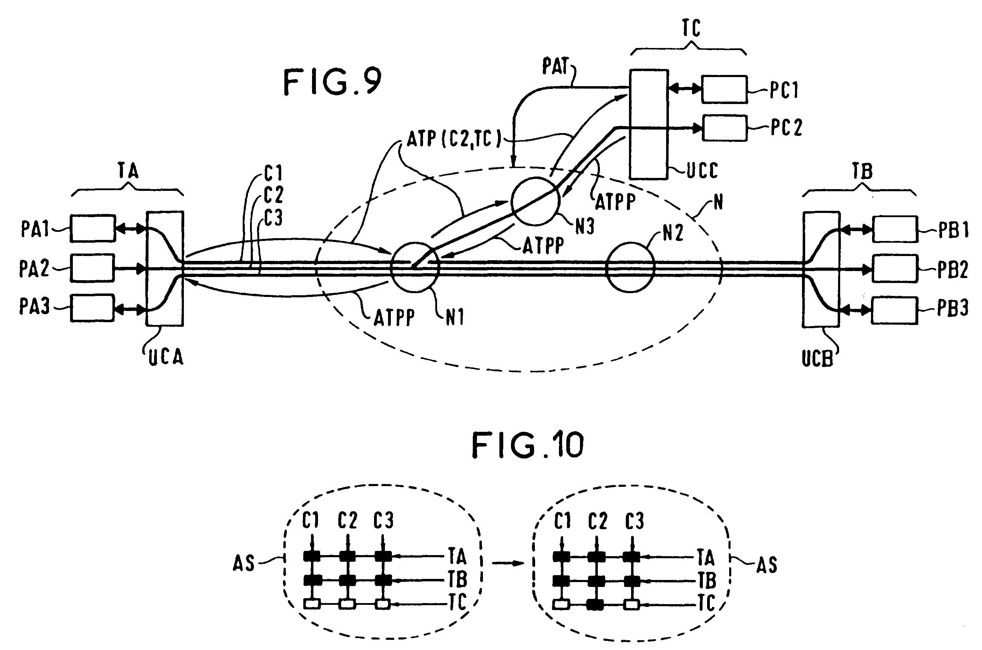

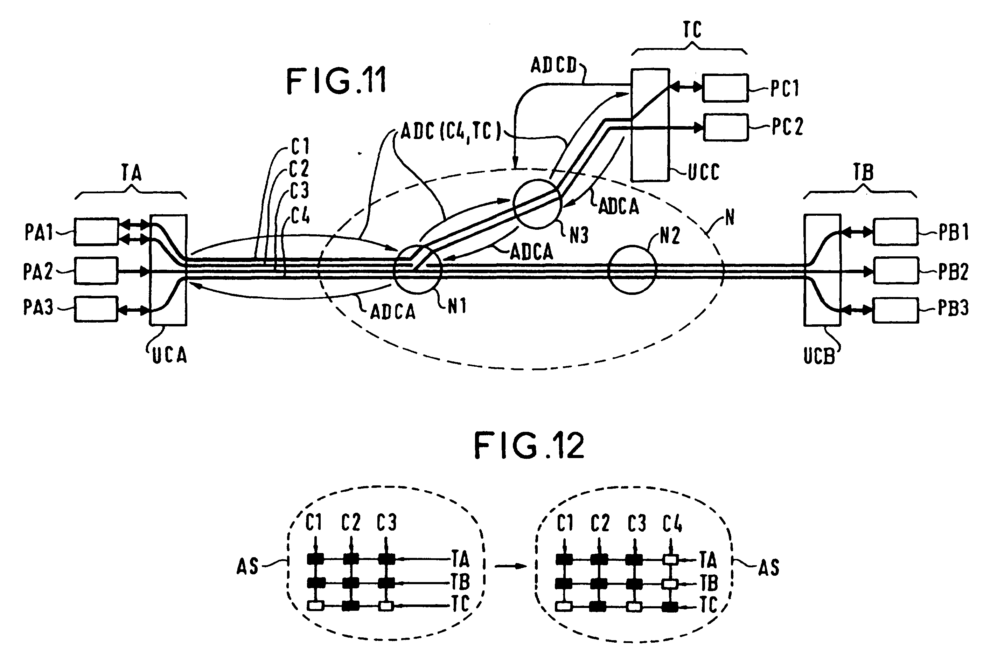

Les figures 9 et 12 illustrent un exemple de mise en oeuvre du protocole selon l'invention pour l'opération de rattachement d'un terminal TC à une connexion C2 déjà établie pour un appel, et à une nouvelle connexion C4 qui est établie spécialement pour le terminal TC. Trois terminaux TA, TB, TC sont déjà parties à cet appel. Trois connexions C1, C2, C3 relient déjà les terminaux TA et TB. La connexion C2 est une connexion unidirectionnelle acheminant des images vidéo. Il est donc possible de rattacher sur C2 un nombre quelconque de terminaux pour diffuser ces images.

La connexion C1 est une connexion bidirectionnelle acheminant des données. Il n'est pas possible de rattacher à C1 un ou plusieurs terminaux en plus de TB, car il se produirait une addition de débits qui serait difficilement gérable. Il est donc nécessaire de créer une connexion supplémentaire C4, bidirectionnelle, pour permettre au terminal TB d'émettre et de recevoir des données, en provenance et à destination du terminal TA, indépendamment de la connexion C1. Supposons, par exemple, que le terminal TA soit le propriétaire des trois connexions C1, C2, C3. Le terminal TA est donc le seul terminal à avoir le droit d'inviter le terminal TC à se rattacher aux connexions C2 et C4.

Les dispositifs de signalisation du terminal TA, du noeud N1, et du noeud N3 activent chacun un automate propre à cet appel et propre à cette opération. Chacun de ces automates est analogue à celui dont les états sont représentés sur la figure 3 et qui ont été décrit précédemment. Il parcourt seulement les états du sous-ensemble SA2 car l'opération de rattachement d'un terminal à une connexion est une opération du type à quatre messages. Seuls les noms des messages sont différents pour l'opération considérée. Le terminal TA émet un message ATP (C2, TC) (ATTACH PARTY C2, TC). L'automate du terminal TA passe de l'état stable AS, correspondant au fait que l'appel est déjà établi, à l'état instable AOI. Le noeud N1 envoie au terminal TA un message d'acquittement local ATPP ( ATTACH PARTY PROCEEDING). L'automate du terminal TA passe alors dans l'état instable AOP où il attend un message d'acquittement global. Le message ATP (C2, TC) est réémis par le noeud N1 vers le noeud N3. Ce dernier émet un message d'acquittement local ATPP à destination du noeud N1, puis réémet le message ATP (C2, TC) à destination du terminal TC. Le terminal TC émet un message d'acquittement local ATPP à destination du noeud N3. Il se rattache à la connexion C2 puis émet un message d'acquittement global PAT (PARTY ATTACHED) qui est diffusé à l'ensemble des entités du réseau.

Ce message est pris en compte par toutes les entités concernées par le rattachement du terminal TC à la connexion C2, pour modifier le contenu de la matrice définissant les états fins. Comme l'appel est du type multipoint, les terminaux TA, TB, TC et les noeuds N1, N2, N3 sont tous concernés. Les automates des noeuds N1 et N3 parcourent les états du sous-ensemble SA2 comme l'automate du terminal TA. La réception du message ATP (C2, TC) active, dans le dispositif de signalisation du terminal TC, un automate simple qui décide s'il peut exécuter l'opération demandée, ou bien s'il doit rejeter la demande. Après l'exécution de l'opération, ce dispositif de signalisation met à jour le contenu de la matrice qu'il mémorise.

La figure 10 représente la modification de la matrice définissant des états fins. Cette modification est réalisée identiquement dans les dispositifs de signalisation de toutes les entités concernées par cette opération : TA, TB, N1, N2, N3, lorsqu'elles reçoivent le message d'acquittement global PAT. Le dispositif de signalisation du terminal TC met à jour sa propre matrice, lorsque ce terminal a exécuté son rattachement à la connexion C2.

Par exemple, dans le terminal TA, avant le rattachement de TC à C2, l'automate est dans l'état actif AS et la matrice comporte trois colonnes correspondant aux connexions C1, C2, C3 ; et trois lignes correspondant aux terminaux TA, TB, TC. Les lignes correspondant à TA et TB comportent des informations binaires indiquant que ces deux terminaux sont connectés tous les deux aux trois connexions C1, C2, C3. La ligne correspondant au terminal TC comporte des informations binaires indiquant que le terminal TC n'est rattaché à aucune des connexions C1, C2, C3. Lorsque le rattachement de TC à C2 à été effectivement réalisé, l'automate du terminal TA revient à son état stable AS mais le contenu de la matrice comporte des informations binaires indiquant que le terminal TC a été rattaché à la connexion C2.

Les figures 11 et 12 illustrent l'établissement de la connexion supplémentaire C4 destinée à permettre au terminal TC d'échanger des données avec le terminal TA. Les dispositifs de signalisation du terminal TA, du noeud N1, et du noeud N3 activent chacun un automate propre à cet appel et propre à cette opération. Chacun de ces automates est analogue à celui dont les états sont représentés sur la figure 3, et qui ont été décrits précédemment. Il parcourt seulement les états du sous-ensemble SA2 car l'opération d'établissement d'une connexion est une opération du type à quatre messages. Seuls les noms des messages sont différents pour l'opération considérée. Le terminal TA émet un message ADC (C4, TC) (ADD CONNECTION C4, TC). L'automate du terminal TA passe de l'état stable AS, correspondant au fait que l'appel est déjà établi, à l'état instable AOI. Le noeud N1 envoie au terminal T1 un message d'acquittement local ADCA (ADD CONNECTION Ack.). L'automate du terminal TA passe alors dans l'état instable AOI, où il attend un message d'acquittement global. Le message ADC (C4, TC) est réémis par le noeud N1, vers le noeud N3. Ce dernier émet un message d'acquittement local ADCA à destination du noeud N1, puis il réémet le message ADC (C4, TC) à destination du terminal TC.

Les noeuds N1 et N3 établissent la connexion C4. Le terminal TC émet un message d'acquittement local ADCA à destination du noeud N3. Il s'attache à la connexion C4 puis émet un message d'acquittement global ADCD (ADD CONNECTION DONE), qui est diffusé à l'ensemble des entités du réseau. Ce message est pris en compte par toutes les entités concernées par l'établissement de la connexion C4, pour modifier le contenu de la matrice des états fins. Comme l'appel est du type multipoint, les terminaux TA, TB, TC et les noeuds N1, N2, N3 sont tous concernés.

Les automates des noeuds N1 et N3 parcourent les états du sous-ensemble SA2 comme l'automate du terminal TA. A la réception du message ADC (C4, T4), le dispositif de signalisation du terminal TC active un automate simple qui décide s'il peut exécuter l'opération demandée, ou bien s'il doit rejeter la demande. Après l'exécution de l'opération, ce dispositif de signalisation met à jour le contenu de la matrice qu'il mémorise.

Il est à noter que le rattachement à la connexion C2 aurait pu être réalisé après la création de la connexion C4 et le rattachement de TC à C4, au lieu d'être effectué avant.

La figure 12 représente la modification de la matrice définissant des états fins. Cette modification est réalisée identiquement dans les dispositifs de signalisation de toutes les entités concernées par cette opération : TA, TB, N1, N2, N3 lorsqu'elles reçoivent le message d'acquittement global ADCD. Le dispositif de signalisation du terminal TC met à jour sa propre matrice, lorsque ce terminal TC a effectué son rattachement à la connexion C4.

Par exemple, dans le terminal TA, avant le rattachement de TC à C4, l'automate est dans l'état actif AS et la matrice comporte trois colonnes correspondant aux connexions C1, C2, C3, et trois lignes correspondant aux terminaux TA, TB, TC. Les lignes correspondant aux terminaux TA et TB contiennent des informations binaires indiquant que ces deux terminaux sont connectés tous les deux aux trois connexions C1, C2, C3. La ligne correspondant au terminal TC comporte des informations binaires indiquant que le terminal TC n'est rattaché qu'à la connexion C2.

Lorsque le rattachement de TC à C4 a effectivement été réalisé, l'automate du terminal TA revient à son état stable AS, mais le contenu de la matrice comporte des informations binaires indiquant que le terminal TC est rattaché aux connexions C2 et C4.

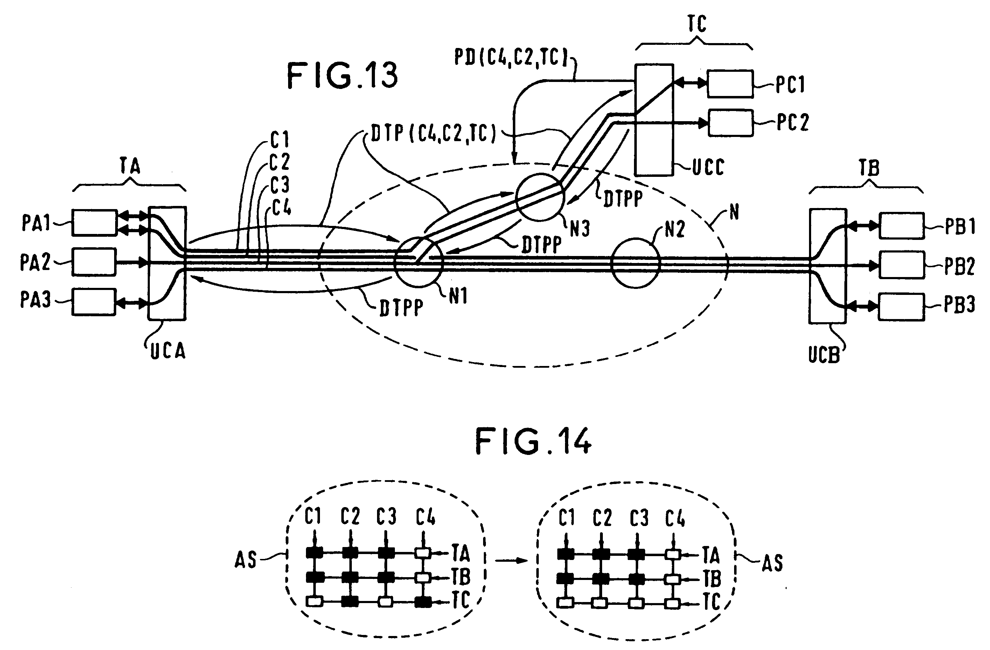

Les figures 13 et 14 illustrent la réalisation de l'opération inverse c'est-à-dire le détachement du terminal TC vis-à-vis des connexions C4 et C2, à la suite d'une invitation émise par le terminal TA. Le terminal TC reste partie à l'appel. Les dispositifs de signalisation du terminal TA, du noeud N1, et du noeud N3 activent chacun un automate propre à cet appel et propre à cette opération. C'est un automate analogue à celui dont les états sont représentés sur la figure 3 et qui ont été décrits précédemment. Il parcourt seulement les états du sous-ensemble SA3 car cette opération est du type à quatre messages. Seuls les messages sont différents. Le terminal TA émet un message DTP (C4, C2, TC) (DETACH PARTY C4, C2, TC). Ce message est retransmis par le noeud N1 et le noeud N3 au terminal TC. Les noeuds N1 et N3, et le terminal TC émettent des messages d'acquittement local DTPP (DETACH PARTY PROCEEDING). Le terminal TC émet en outre un message d'acquittement global PD (C4, C2, TC) (PARTY DETACHED C4, C2, TC) qui est diffusé à toutes les entités. En particulier, il est retransmis par le noeud N3 et le noeud N1 jusqu'au terminal TA, et par le noeud N2 jusqu'au terminal TB.

La figure 14 représente la modification subie par la matrice des états fins, dans le terminal A par exemple. Lorsque l'opération n'est pas encore effectivement réalisée, l'automate du terminal TA est dans son état stable AS et la matrice des états fins comporte : quatre colonnes correspondant aux quatre connexions C1, C2, C3, C4, et trois lignes correspondant aux trois terminaux TA, TB, TC. Elle contient des informations binaires indiquant que les deux terminaux TA et TB sont rattachés tous les deux aux trois connexions C1, C2, C3, et que le terminal TC est rattaché seulement aux deux connexions C4 et C2. Lorsque l'opération a été effectivement réalisée, l'automate est revenu dans son état stable AS et la matrice des états fins a été mise à jour sous la commande du message d'acquittement global PD (C4, C2, TC). La ligne correspondant au terminal TC contient alors quatre informations binaires indiquant que le terminal TC n'est rattaché à aucune des quatre connexions C1, C2, C3, C4. Le terminal TA, qui est propriétaire de la connexion C4 peut alors décider soit de demander le rattachement d'un autre terminal à la connexion C4, soit de demander le relâchement de cette connexion.

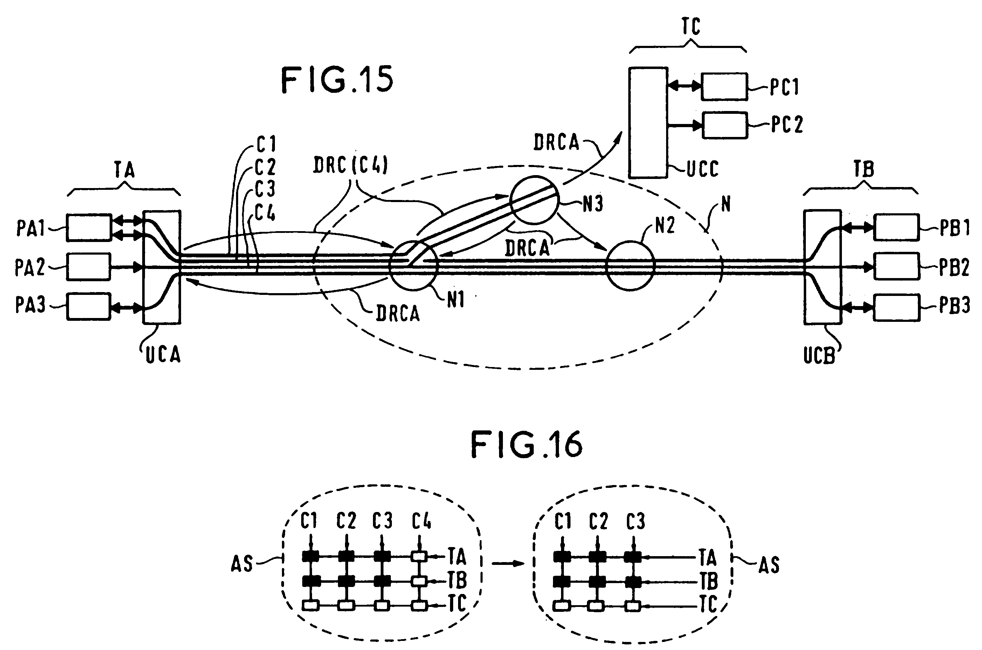

Les figures 15 et 16 illustrent l'opération de relâchement de la connexion C4, alors que le terminal TC reste partie à l'appel, au moins provisoirement. Les dispositifs de signalisation du terminal T1, du noeud N1 et du noeud N3 activent chacun un automate propre à cet appel et propre à cette opération. Chacun de ces automates est analogue à celui dont les états sont représenté sur la figure 3, et qui ont été décrits précédemment. Il parcourt seulement les états du sous-ensemble SA3 car l'opération de relâchement d'une connexion est une opération du type à deux messages. Seuls les noms des messages sont différents pour l'opération considérée. Le terminal TA émet un message DRC (C4) (DROP CONNECTION C4). Le noeud N1 envoie au terminal TA un message d'acquittement local DRCA (DROP CONNECTION ACK.) et réémet le message DRC (C4) à destination du noeud N3. Ce dernier relâche la connexion C4 puis diffuse dans tout le réseau un message d'acquittement local DRCA. Ce message est pris en compte par toutes entités concernées par le relâchement de la connexion C4. L'appel étant du type multipoint, ce relâchement concerne TA, TB, TC, N1, N2, N3.

La figure 16 représente la modification de la matrice définissant les états fins. Cette modification est réalisée identiquement dans les dispositifs de signalisation des entités TA, TB, TC, N1, N2, N3 lorsqu'elles reçoivent le message DRCA diffusé dans le réseau. Par exemple dans le terminal TA, avant le relâchement de C4, l'automate de ce terminal est dans son état stable AS ; la matrice comporte quatre colonnes correspondant respectivement à C1, C2, C3, C4. Cette matrice contient des informations binaires indiquant qu'aucun des terminaux TA, TB, TC n'est rattaché à C4. Après le relâchement de C4, cet automate est revenu dans sont état stable AS mais la matrice ne comporte plus que trois colonnes correspondant respectivement aux connexions C1, C2, C3.

Le protocole selon l'invention est applicable à d'autres opérations portant sur : l'état d'un appel, l'état d'un terminal vis-à-vis d'un appel, ou l'état d'un terminal vis-à-vis d'une connexion, ou sur une caractéristique d'une connexion. En particulier, il est possible, dans certains cas, de demander une augmentation de la bande passante d'une connexion déjà attachée au terminal considéré, au lieu de demander l'établissement d'une connexion supplémentaire, ou au lieu de demander le rattachement à une autre connexion déjà établie mais qui n'est pas attachée au terminal considéré.

Le protocole selon l'invention est applicable à tous les types de réseau = Réseau à intégration de services, ou non, à large bande ou à bande étroite.

## Revendications

1. Protocole de signalisation supportant des services multimédia, pour un réseau de télécommunication comportant une pluralité d'entités qui sont : des terminaux, notamment des terminaux multimédia (TA, TB, TC), et des noeuds de commutation (N1, N2, N3) établissant des connexions entre ces terminaux lorsqu'un appel est établi ; chaque entité comportant un dispositif de signalisation pour émettre et recevoir des messages de signalisation ; ce protocole consistant à activer, dans le dispositif de signalisation d'une première entité (TA ou N1 ou N2), qui est partie à un appel, un automate (SA1, SA2, SA3) pouvant être dans :
- un état de repos stable (IDL), où il retourne quand cet appel est relâché ;
- un état actif stable (AS), où il arrive au moment où cet appel est établi ;
ce protocole étant caractérisé en ce qu'il consiste en outre à :
- faire passer cet automate de l'état actif stable (AS) à un premier état instable (AOI) lorsqu'une première entité (TA ou N1 ou N3) émet ou réémet une requête (ORq) adressée à une seconde entité (TB), cette requête demandant la réalisation d'une opération d'un premier type ;
- puis faire passer cet automate du premier état instable (AOI) à un deuxième état instable (AOP) lorsque la première entité reçoit un acquittement dit local (OLA) indiquant que la requête (ORq) a bien été reçue par la seconde entité (TC), ou a bien été reçue puis réémise par une entité intermédiaire (N1 ou N3) entre la première et la seconde entité ;
- puis faire passer cet automate du deuxième état instable (AOP) à l'état actif stable (AS) lorsque la première entité (TA ou N1 ou N2) reçoit soit un acquittement dit global (OD) indiquant que l'opération demandée a été effectivement réalisée par la seconde entité (TC), soit un message (ORj) indiquant que la requête est rejetée par la seconde entité (TC) ou une entité intermédiaire (N1 ou N3) ;
- faire passer cet automate de l'état actif stable (AS) à un troisième état instable (IRI) lorsqu'une première entité (TA ou N1 ou N3) émet ou réémet une requête (IRRq) adressée à une seconde entité (TC), cette requête demandant la réalisation d'une opération d'un second type ;
- puis faire passer cet automate du troisième état instable (IRI) à l'état actif stable (AS) lorsque la première entité (TA ou N1 ou N3) reçoit soit un acquittement dit local (IRRLA) indiquant que la requête a bien été reçue par la seconde entité (TC) ou a bien été reçue puis réémise par une entité intermédiaire (N1 ou N3) entre la première et la seconde entité;
et en ce qu'il consiste on outre à :
- subdiviser chaque état (AS, AOI, AOP, IRI) dudit automate en une pluralité d'états fins définis respectivement par les valeurs d'une matrice (M) dont les colonnes correspondent respectivement aux connexions (C1, C2, C3) établies pour cet appel (CR); dont les lignes correspondent respectivement aux terminaux (TA, TB, TC) qui sont parties à cet appel; et contenant des informations binaires représentant l'état de chaque terminal (TA, TB, TC) vis à vis de chaque connexion (C1, C2, C3) établie pour cet appel ;
- mémoriser au moins partiellement cette matrice dans le dispositif de signalisation de chaque entité (TA, TB, TC, N1, N2, N3) qui est concernée par un appel ;
- mettre à jour la matrice (M) de l'automate de chacune des entités (TA, TB, TC, N1, N2, N3) concernées par une opération, lorsque cette entité reçoit un message concernant cette opération, et que ce message indique un changement de l'état d'un terminal (TA, TB, TC), qui est partie à l'appel considéré, vis-à-vis de cet appel et/ou vis-à-vis des connexions établies pour cet appel ;
- utiliser cette matrice (M) comme une variable pour ce protocole.

2. Protocole selon la revendication 1, caractérisé en ce que, pour chaque appel, il consiste en outre & attribuer à un seul terminal appelé propriétaire de cet appel :
- le droit d'inviter au moins un autre terminal a être partie à cet appel ;
- le droit d'inviter au moins un autre terminal à ne plus être partie à cet appel ;
- le droit de relâcher cet appel ;
- le droit de transférer l'ensemble des droits précédents à un autre terminal qui est partie à cet appel, dans le cas où cet appel a établi une communication du type bidirectionnel multipoint.

3. Protocole selon la revendication 2, caractérisé en ce que, pour chaque connexion, il consiste en outre à attribuer à un seul terminal appelé propriétaire de cette connexion :
- le droit d'inviter un terminal à être rattaché à cette connexion ;
- le droit d'inviter un terminal à être détaché de cette connexion ;
- le droit de demander une modification des caractéristiques de cette connexion ;
- le droit de demander le relâchement de cette connexion;
- le droit de se détacher de cette connexion, à sa propre initiative.

## Claims

1. Signalling protocol supporting multimedia services for a telecommunications network including a plurality of entities: terminals, including multimedia terminals (TA, TB, TC), and switching nodes (N1, N2, N3) setting up connections between these terminals when a call is set up; each entity including a signalling device for sending and receiving signalling messages; this protocol consisting in activating, in the signalling device of a first entity (TA or N1 or N2), which is a party to a call, an automaton (SA1, SA2, SA3) which can be in:
- a stable idle state (IDL), to which it returns when the call is cleared down;
- an active stable state (AS) which it enters when the call is set up; this protocol being characterized in that it further consists in:
- having this automaton change from the active stable state (AS) to a first unstable state (AOI) when a first entity (TA or N1 or N3) sends or forwards a request (ORq) addressed to a second entity (TB), this request asking for execution of an operation of a first type;
- then having this automaton change from the first unstable state (AOI) to a second unstable state (AOP) when the first entity receives a local acknowledgment (OLA) indicating that the request (ORq) has been received by the second entity (TC) or has been received and then forwarded by an intermediate entity (N1 or N3) between the first and second entities;
- then having this automaton change from the second unstable state (AOP) to the active stable state (AS) when the first entity (TA or N1 or N2) receives either a global acknowledgement (OD) indicating that the operation requested has been executed by the second entity (TC) or a message (ORj) indicating that the request has been rejected by the second entity (TC) or an intermediate entity (N1 or N3);
- having this automaton change from the active stable state (AS) to a third unstable state (IRI) when a first entity (TA or N1 or N3) sends or forwards a request (IRRq) addressed to a second entity (TC), this request asking for the execution of an operation of a second type;
- then having this automaton change from the third unstable state (IRI) to the active stable state (AS) when the first entity (TA or N1 or N3) receives either a local acknowledgement (IRRLA) indicating that the request has been received from the second entity (TC) or has been received and then forwarded by an intermediate entity (N1 or N3) between the first and second entities; and in that it further consists in:
- subdividing each state (AS, AOI, AOP, IRI) of said automaton into a plurality of fine states respectively defined by values of a matrix (M) whose columns correspond to respective connections (C1, C2, C3) set up for this call (CR); the rows of which correspond respectively to the terminals (TA, TB, TC) which are parties to this call; and containing binary data representing the status of each terminal (TA, TB, TC) vis-a-vis each connection (C1, C2, C3) set up for this call;
- memorizing at least part of this matrix in the signalling device of each entity (TA, TB, TC, N1, N2, N3) which a call concerns;
- updating the matrix (M) of the automaton of each of the entities (TA, TB, TC, N1, N2, N3) that an operation concerns when this entity receives a message concerning this operation and the message indicates a change of state of a terminal (TA, TB, TC) which is a party to the call in question vis-à-vis this call and/or vis-à-vis the connections set up for this call;
- using this matrix (M) as a variable for this protocol.

2. Protocol according to claim 1 characterized in that for each call, it further consists in allocating to a single terminal called the proprietor of the call:
- the right to invite at least one other terminal to be a party to this call;
- the right to invite at least one other terminal to no longer be a party to this call;
- the right to clear down this call;
- the right to transfer all of the above rights to another terminal which is a party to this call, in the case where the call has set up bidirectional multipoint communication.

3. Protocol according to claim 2 characterized in that, for each connection, it further consists in allocating to a single terminal called the proprietor of this connection:
- the right to invite a terminal to be attached to this connection;
- the right to invite a terminal to be detached from this connection;
- the right to request a modification of the characteristics of this connection;
- the right to request the clearing down of this connection;
- the right to be detached from this connection at its own initiative.

## Patentansprüche

1. Signalisierungsprotokoll mit Unterstützung für Multimediadienste für ein Telekommunikationsnetz, das eine Mehrzahl von Einheiten aufweist, nämlich: Endgeräte, insbesondere Multimediaendgeräte (TA, TB, TC) und Vermittlungsknoten (N1, N2, N3), die Verbindungen zwischen diesen Endgeräten etablieren, wenn ein Ruf etabliert wird; wobei jede Einheit eine Signalisierungsvorrichtung zum Senden und Empfangen von Signalisierungsmeldungen aufweist; wobei das Protokoll darin besteht, in der Signalisierungsvorrichtung einer ersten Einheit (TA oder N1 oder N2), die an einem Ruf beteiligt ist, einen Automaten (SA1, SA2, SA3) zu aktivieren, der sich in
- einem stabilen Ruhezustand (IDL), in den er zurückkehrt, wenn der Ruf freigegeben wird;
- einem stabilen aktiven Zustand (AS), in den er in dem Moment gelangt, in dem der Ruf etabliert wird,
befinden kann,
dadurch gekennzeichnet, dass das Protokoll ferner darin besteht,
- diesen Automaten von dem stabilen aktiven Zustand (AS) in einen ersten instabilen Zustand (AOI) übergehen zu lassen, wenn eine erste Einheit (TA oder N1 oder N3) eine an eine zweite Einheit (TB) adressierte Anforderung (ORq) sendet oder weitersendet, wobei die Anforderung die Ausführung einer Operation eines ersten Typs verlangt;
- dann diesen Automaten von dem ersten instabilen Zustand (AOI) in einen zweiten instabilen Zustand (AOP) übergehen zu lassen, wenn die erste Einheit eine sogenannte lokale Bestätigung (QLA) empfängt, die angibt, dass die Anforderung (ORq) von der zweiten Einheit (TC) gut empfangen worden ist oder von einer intermediären Einheit (N1 oder N3) zwischen der ersten und der zweiten Einheit gut empfangen und dann weitergesendet worden ist;
- dann diesen Automaten von dem zweiten instabilen Zustand (AOP) in den stabilen aktiven Zustand (AS) übergehen zu lassen, wenn die erste Einheit (TA oder N1 oder N2) eine sogenannte globale Bestätigung (OD) empfängt, die angibt, dass die verlangte Operation von der zweiten Einheit (TC) tatsächlich ausgeführt worden ist, oder eine Meldung (ORj) empfängt, die angibt, dass die Anforderung von der zweiten Einheit (TC) oder einer intermediären Einheit (N1 oder N3) abgewiesen worden ist;
- den Automaten vom stabilen aktiven Zustand (AS) in einen dritten instabilen Zustand (IRI) übergehen zu lassen, wenn eine erste Einheit (TA oder N1 oder N3) eine an eine zweite Einheit (TC) adressierte Anforderung (IRRq) sendet oder weitersendet, wobei die Anforderung die Ausführung einer Operation eines zweiten Typs verlangt;
- dann diesen Automaten vom dritten instabilen Zustand (IRI) in den stabilen aktiven Zustand (AS) übergehen zu lassen, wenn die erste Einheit (TA oder N1 oder N3) eine sogenannte lokale Bestätigung (IRRLA) empfängt, die angibt, dass die Anforderung von der zweiten Einheit (TC) gut empfangen worden ist oder von einer intermediären Einheit (N1 oder N3) zwischen der ersten und der zweiten Einheit gut empfangen und dann weitergesendet worden ist; und dass es außerdem darin besteht,
- jeden Zustand (AS, AOI, AOP, IRI) des Automaten in eine Mehrzahl von Feinzuständen zu unterteilen, die jeweils durch die Werte einer Matrix (M) definiert sind, deren Spalten jeweils den für diesen Ruf (CR) etablierten Verbindungen (C1, C2, C3) entsprechen und deren Zeilen jeweils den Endgeräten (TA, TB, TC) entsprechen, die an diesem Ruf beteiligt sind, und die binäre Informationen enthält, die den Zustand jedes Endgeräts (TA, TB, TC) in Bezug auf jede für diesen Ruf etablierte Verbindung (C1, C2, C3) darstellen;
- diese Matrix wenigstens teilweise in der Signalisierungsvorrichtung jeder Einheit (TA, TB, TC, N1, N2, N3) zu speichern, die von einem Ruf betroffen ist;
- die Matrix (M) des Automaten jeder der von einer Operation betroffenen Einheiten (TA, TB, TC, N1, N2, N3) zu aktualisieren, wenn diese Einheit eine diese Operation betreffende Meldung empfängt, und dass die Meldung eine zustandsänderung eines Endgeräts (TA, TB, TC), das an dem betreffenden Ruf beteiligt ist, bezüglich dieses Rufs und/oder bezüglich der für diesen Ruf etablierten Verbindungen angibt;
- diese Matrix (M) als eine Variable für dieses Protokoll zu benutzen.

2. Protokoll nach Anspruch 1, dadurch gekennzeichnet, dass es für jeden Ruf ferner darin besteht, einem einzigen, als Eigentümer dieses Rufs bezeichneten Endgerät zuzuweisen:
- das Recht, wenigstens ein anderes Endgerät aufzufordern, sich an dem Ruf zu beteiligen;
- das Recht, wenigstens ein anderes Endgerät aufzufordern, sich an dem Ruf nicht mehr zu beteiligen;
- das Recht, diesen Ruf freizugeben;
- das Recht, alle vorgenannten Rechte auf ein anderes Endgerät zu übertragen, das an dem Ruf beteiligt ist, in dem Fall, dass dieser Ruf eine bidirektionale Mehrpunktverbindung etabliert hat.

3. Protokoll nach Anspruch 2, dadurch gekennzeichnet, dass es für jede Verbindung ferner darin besteht, einem einzigen, als Eigentümer dieser Verbindung bezeichneten Endgerät zuzuweisen:
- das Recht, ein Endgerät aufzufordern, sich an die Verbindung anzuschließen,
- das Recht, ein Endgerät aufzufordern, sich von der Verbindung zu trennen,
- das Recht, eine Änderung der Eigenschaften dieser Verbindung zu verlangen;
- das Recht, die Freigabe dieser Verbindung zu verlangen;
- das Recht, sich auf eigene Initiative von der Verbindung zu trennen.
